# EUROPÄISCHE PATENTSCHRIFT

(11) **EP 2 060 832 B1**
(45) Veröffentlichungstag und Bekanntmachung des Hinweises auf die Patenterteilung: **16.09.2015**
(21) Anmeldenummer: 08165958.3
(22) Anmeldetag: 07.10.2008
(51) Int. Cl.: F16J 3/04, F16F 9/04, F16J 3/06

(54) **Klemmkontur für ein druckbeaufschlagbares Bauteil und Spannmittel dafür**
Clamp contour for a pressure admittable component and tensioner therefor
Contour de serrage pour un composant pouvant être alimenté en pression et élément de serrage correspondant

(30) Priorität: 16.11.2007 DE 102007055077
(43) Veröffentlichungstag der Anmeldung: 20.05.2009
(73) Patentinhaber: Continental Teves AG & Co. OHG, 60488 Frankfurt (DE)
(72) Erfinder: Narberhaus, Stefan, Dr., 30826 Garbsen (DE); Möritz, Matthias, 31535 Neustadt (DE); Rosner, Dirk, 30826 Garbsen (DE); Asmus, Mirko, 38120 Braunschweig (DE); Dankenbring, Carsten, 30419 Hannover (DE)

(56) Entgegenhaltungen:
- EP-A1- 1 715 221
- WO-A1-2004/018895
- US-A- 5 374 037
- US-A1- 2002 043 746

## Beschreibung

Die Erfindung betrifft eine Klemmkontur für ein druckbeaufschlagbares Bauteil, beispielsweise einen Abrollkolben oder eine Anschlussplatte einer Schlauchrollbalg-Luftfeder, wobei das druckbeaufschlagbare Bauteil einen Klemmbereich aufweist, in dem es mittels geeigneter Spannmittel mit einem schlauchförmigen Bauteil, beispielsweise einem Schlauchrollbalg einer Schlauchrollbalg-Luftfeder, verklemmbar ist, und wobei im Klemmbereich wenigstens eine umlaufende Erhebung zur Verbesserung der Klemmung vorgesehen ist.

Es gibt viele Anwendungsfälle, in denen druckbeaufschlagte Bauteile miteinander zuverlässig und druckdicht verbunden werden müssen, damit eine einwandfreie Funktion des Bauteileverbundes gewährleistet ist. Möglich ist beispielsweise der Anschluss von Schläuchen aus elastomerem Werkstoff an Verbindungsteile bzw. Stutzen in Systemen, welche unter Druck stehende Fluide, wie Wasser, Luft oder Öl, in sich führen. Ein anderer denkbarer Anwendungsfall sind beispielsweise sogenannte Schlauchrollbalg-Luftfedern, welche als Federungsmittel in Kraftfahrzeugen häufig eingesetzt werden. Hierbei wird in der Regel ein aus einem Endlosschlauch abgeschnittener, wulstloser Schlauchrollbalg aus elastomerem Werkstoff mit seinen Enden an Befestigungsteilen dicht angebracht bzw. verklemmt. Üblicherweise erfolgt die Verklemmung mit speziell dafür ausgebildeten Spannmitteln, nämlich geschlossenen metallischen Spannringen, welche durch plastisches, radiales Verformen auf die Wandung des Schlauchrollbalges fest aufgepresst werden. Im Betriebszustand werden der Schlauchrollbalg, mithin auch die Befestigungsteile, mit Druckluft beaufschlagt, wodurch unter dynamischer Belastung eine federnde Relativbewegung zwischen den Befestigungsteilen möglich ist. Das im Betriebszustand oben befindliche Befestigungsteil wird im Allgemeinen als Anschlussplatte und das unten befindliche Befestigungsteil als Abrollkolben bezeichnet, da dieses kolbenartig ausgebildet ist und sich der Schlauchrollbalg bei der federnden Relativbewegung zwischen Anschlussplatte und Abrollkolben auf der Umfangsfläche des Abrollkolbens abrollt.

Es versteht sich eigentlich von selbst, dass eine nachlassende oder gar fehlerhafte Klemmverbindung zwischen den Bauteilen zu einer spürbaren Verschlechterung oder gar zu einem gänzlichen Versagen des Bauteilverbundes führen kann. Man ist daher ständig bestrebt, die Klemmverbindungen zwischen den druckbeaufschlagten Bauteilen zu verbessern.

Aus der DE 103 54 574 B3 ist eine gattungsgemäße Klemmkontur für den Abrollkolben bzw. die Anschlussplatte einer Schlauchrollbalg-Luftfeder bekannt. Im Klemmbereich für den Schlauchrollbalg ist die Klemmkontur dabei durch umlaufende, trapezförmige Erhebungen gebildet. Die trapezförmigen Erhebungen sollen zu einer deutlichen Verbesserung der Dichtheit führen, ohne dass die Gefahr einer Beschädigung der Balgwandung besteht.

Auch die EP 1 355 079 zeigt eine gattungsgemäße Klemmkontur für eine Schlauchrollbalg-Luftfeder, die durch eine umlaufende, trapezförmige Erhebung gekennzeichnet ist.

In der gattungsbildenden EP 0 151 696 A1 wird eine Schlauchrollbalg-Luftfeder mit einer sägezahnförmigen Klemmkontur beschrieben, wobei beim Verpressen des Schlauchrollbalges auf dem Abrollkolben die sägezahnförmigen, scharfkantigen Erhebungen in die Balgwandung eindringen, wodurch die kraftschlüssige Verbindung durch einen Formschluss ergänzt und verbessert werden soll. Ein ähnliches Prinzip ist auch aus der DE 10 2004 056 517 A1 bekannt.

Schließlich offenbart die EP 0 379 667 A1 einen im Längsschnitt speziell ausgebildeten Spannring, der in der Mitte seines Profils mit einer halbkreisförmigen Ausnehmung versehen ist, die mit einer umlaufenden, nasenförmigen Erhebung der dort gezeigten Klemmkontur zusammenwirkt.

Die Schriften US 5 374 037 A und WO 2004/018895 A1 zeigen beide Klemmkonturen mit mindestens zwei axial umlaufenden bogenförmigen Erhebungen und den dazu passenden Spannmittel mit axial umlaufenden bogenförmigen Vertiefungen, insbesondere durch die Gestaltungsform der Kontur aus der Schrift US 5 374 037 A wird das elastomere Material des schlauchförmigen Bauteils so verpresst, dass es in die Vertiefungen fließen kann.

Der Erfindung liegt die Aufgabe zugrunde, eine Klemmkontur für ein druckbeaufschlagtes Bauteil, beispielsweise einen Abrollkolben oder eine Anschlussplatte einer Schlauchrollbalg-Luftfeder, bereitzustellen, welche eine zuverlässige, druckdichte Verklemmung der beteiligten Bauteile ermöglicht und welche eine Gefahr von Beschädigungen des schlauchförmigen Teils verringert. Weiterhin soll ein verbessertes Spannmittel für die Verklemmung bereitgestellt werden.

Der Erfindung liegt die Erkenntnis zugrunde, dass durch die Klemmkontur sowie durch die Wahl geeigneter Spannmittel die Dichtigkeit und der Halt einer Klemmverbindung entscheidend beeinflusst werden kann.

Gemäß den Merkmalen des Anspruchs 1 geht die Erfindung daher aus von Klemmkontur für ein druckbeaufschlagbares Bauteil, beispielsweise einen Abrollkolben oder eine Anschlussplatte einer Schlauchrollbalg-Luftfeder, wobei das druckbeaufschlagbare Bauteil einen Klemmbereich aufweist, in dem es mittels geeigneter Spannmittel mit einem schlauchförmigen Bauteil, beispielsweise einem Schlauchrollbalg einer Schlauchrollbalg-Luftfeder, verklemmbar ist, und wobei im Klemmbereich wenigstens eine umlaufende Erhebung zur Verbesserung der Klemmung vorgesehen ist. Zudem ist erfindungsgemäß vorgesehen, dass die umlaufende Erhebung mit einer umlaufenden, rillen- oder nutförmigen Vertiefung versehen ist.

Durch diesen konstruktiven Aufbau wird erreicht, dass bei der Verklemmung das Material des schlauchförmigen Bauteils in die rillen- oder nutförmige Vertiefung gedrückt wird. Somit wird auf relativ einfache Weise ein Kraft- und Formschluss erzielt sowie die Gefahr von Beschädigungen des schlauchförmigen Bauteils verringert.

Die Unteransprüche beschreiben bevorzugte Weiterbildungen oder Ausgestaltungen der Erfindung.

So ist gemäß einer ersten bevorzugten Weiterbildung der Erfindung vorgesehen, dass die Erhebung trapezförmig ausgebildet ist. Durch diese Ausgestaltung ergibt sich trotz einer vergrößerten Verpressung des schlauchförmigen Bauteils in diesem Bereich eine relativ gleichmäßige Verteilung der Flächenpressung. Die Gefahr, das schlauchförmige Bauteil durch eine Überhöhung der Flächenpressung zu beschädigen ist also relativ gering. Alternativ dazu kann die Erhebung zweckmäßigerweise aber auch, in axialer Richtung, bogenförmig ausgebildet sein.

Im Folgenden anhand der beiliegenden Zeichnung werden an Ausführungsbeispielen näher erläutert. Darin zeigt
- Fig. 1: eine Darstellung der Klemmkontur im Längsschnitt gemäß einer ersten Ausführungsform im Montagezustand,
- Fig. 2: eine Darstellung der Klemmkontur im Längsschnitt gemäß einer zweiten Ausführungsform im Montagezustand, und
- Fig. 3: eine beispielhafte Darstellung eines erfindungsgemäßen Spannmittels im Längsschnitt im Montagezustand.

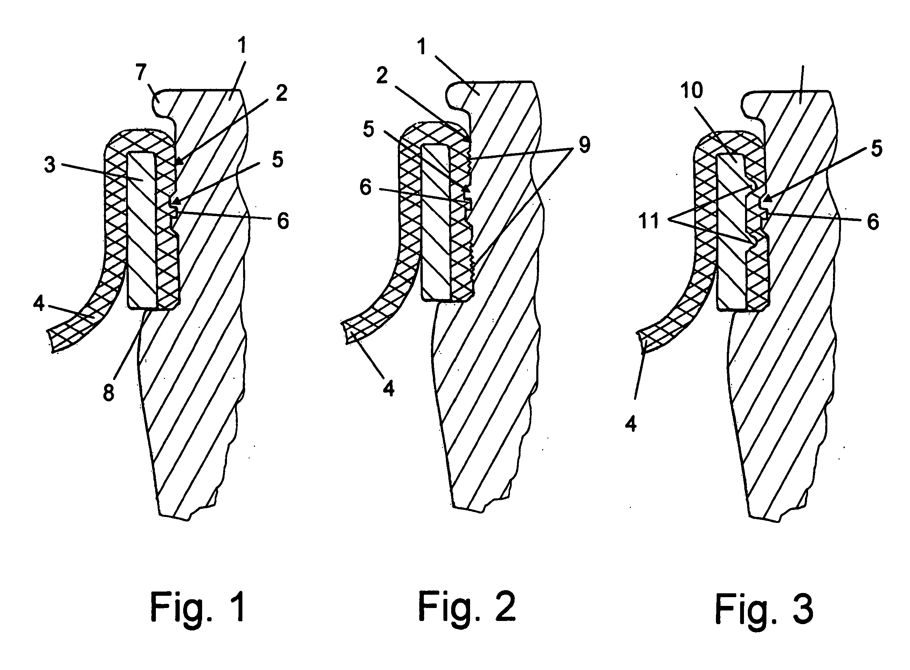

Zunächst wird auf Fig.1 Bezug genommen. In dieser ist der obere Teil eines Abrollkolbens 1 einer nicht näher dargestellten Schlauchrollbalg-Luftfeder zu sehen. Der Abrollkolben 1 weist einen Klemmbereich 2 auf, in dem ein Schlauchrollbalg 4 mittels eines Spannrings 3 kraft- und formschlüssig sowie druckdicht verklemmt ist. Ferner ist oben am Abrollkolben 1 ein radialer umlaufender Wulst 7 und unten ein radialer umlaufender Absatz 8 ersichtlich, durch die der Klemmbereich 2 axial begrenzt ist.

Der Klemmbereich 2 ist mit einer speziellen Klemmkontur zur Verbesserung der Klemmeigenschaften versehen, wobei die Klemmkontur im wesentlichen durch eine umlaufende, trapezförmige Erhebung 5 geprägt ist, welche in etwa in der Mitte des Klemmbereichs 2 angeordnet ist. Die Erhebung 5, die in axialer Richtung des Bauteils 1 auch bogen- oder halbkreisförmig ausgeführt sein könnte, weist in etwa in der Mitte ihres Trapezplateaus eine umlaufende, rillen- oder nutförmige Vertiefung 6 auf, welche in ihrer Tiefe in etwa bis zum Grund der trapezförmigen Erhebung 5 reicht. Es ist zu erkennen, dass sich im gezeigten Klemm- bzw. Montagezustand das Material des Schlauchrollbalgs 4 in diese rillen- oder nutförmige Vertiefung 6 hinein drückt. Im Beispiel weist die Vertiefung 6 einen in etwa rechteckigen bzw. quadratischen Querschnitt auf. Sie könnte aber auch andere Querschnitte, beispielsweise halbreis- oder dreieckförmig ausgebildet sein. Insgesamt ist so eine konstruktiv einfache, aber hochwirksame Klemmkontur erzeugt.

Nun Bezug nehmend auf Fig. 2 ist zu erkennen, dass die Klemmkontur durch mehrere zusätzliche, umlaufende und radial spitz zulaufende Erhebungen 9 ergänzt ist, die axial beidseitig der trapezförmigen Erhebung 5 angeordnet sind. Dadurch ergibt sich jeweils eine sägezahnförmige Kontur. Es ist eine beliebige Variation in der Anzahl und Anordnung der Erhebungen 9 denkbar.

Fig. 3 zeigt schließlich einen erfindungsgemäßen Spannring 10, welcher radial innenseitig mit zwei bogenförmigen Erhebungen 11 versehen ist. Es ist zu erkennen, dass die Erhebungen 11 axial derart zueinander beabstandet und angeordnet sind, dass sie im Klemmzustand die trapezförmige Erhebung 5 des Abrollkolbens 1 beidseitig umgeben bzw. umschlingen. Auch die Form der Erhebungen 11 kann nach Bedarf variiert werden. Möglich ist beispielsweise, diese auch trapezförmig auszubilden.

Eine erfindungsgemäß ausgebildete Klemmkontur für ein druckbeaufschlagbares Bauteil bzw. Dichtungsanordnung erfüllte bei einfachem und kostengünstig herzustellendem Aufbau in einem konkreten kraftfahrzeugtechnischen Anwendungsfall entsprechend durchgeführter Untersuchungen alle Anforderungen hinsichtlich der Gas- und/oder Flüssigkeitsdichtigkeit in einem Temperaturwechseltest nach vorgegebenen Prüfkriterien.

### Bezugszeichenliste

- 1: Abrollkolben einer Schlauchrollbalg-Luftfeder
- 2: Klemmbereich des Abrollkolbens
- 3: Spannring
- 4: Schlauchrollbalg
- 5: Trapezförmige Erhebung
- 6: Rillen- bzw. nutförmige Vertiefung
- 7: Umlaufende Wulst
- 8: Umlaufender Absatz
- 9: Umlaufende und radial spitz zulaufende Erhebungen
- 10: Spannring
- 11: Radial innenseitige, umlaufende Erhebungen des Spannrings

## Patentansprüche

1. Klemmkontur für ein druckbeaufschlagbares Bauteil (1), beispielsweise Abrollkolben oder Anschlussplatte einer Schlauchrollbalg-Luftfeder, wobei das druckbeaufschlagbare Bauteil (1) einen Klemmbereich (2) aufweist, in dem es mittels geeigneter Spannmittel (3) mit einem schlauchförmigen Bauteil (4), beispielsweise einem Schlauchrollbalg einer Schlauchrollbalg-Luftfeder, verklemmbar ist, und wobei im Klemmbereich (2) wenigstens zwei umlaufende Erhebungen (5) zur Verbesserung der Klemmung vorgesehen sind, **dadurch gekennzeichnet, dass** die zwei umlaufenden Erhebungen (5) trapezförmig ausgebildet und mit einer umlaufenden nutförmigen Vertiefung (6) versehen sind, sowie einem Spannmittel (10) als geschlossener, metallischer Spannring (10) versehen mit wenigstens zwei radial innenseitig umlaufenden Erhebungen (11).

2. Spannmittel (10) nach Anspruch 1, **dadurch gekennzeichnet, dass** die Erhebungen (11) am Spannring (10) trapez- oder bogenförmig ausgebildet sind und die Klemmkontur axial umschlingen.

## Claims

1. Clamping contour for a component (1) which can be loaded with pressure, for example a rolling piston or connecting plate of a rolling sleeve-type air spring, the component (1) which can be loaded with pressure having a clamping region (2), in which it can be clamped by means of suitable clamping means (3) to a tubular component (4), for example a rolling sleeve-type bellows of a rolling sleeve-type air spring, and at least two circumferential elevations (5) for improving the clamping action being provided in the clamping region (2), **characterized in that** the two circumferential elevations (5) are of trapezoidal configuration and are provided with a circumferential groove-shaped depression (6), and with a clamping means (10) as a closed, metallic clamping ring (10) provided with at least two circumferential elevations (11) radially on the inner side.

2. Clamping means (10) according to Claim 1, **characterized in that** the elevations (11) on the clamping ring (10) are of trapezoidal or arcuate configuration and wrap axially around the clamping contour.

## Revendications

1. Contour de serrage pour un composant pouvant être sollicité par pression (1), par exemple un piston déroulant ou une plaque de raccordement d'un ressort pneumatique à soufflet roulant tubulaire, dans lequel le composant pouvant être sollicité par pression (1) présente une région de serrage (2) dans laquelle il peut être serré par des moyens de serrage appropriés (3) avec un composant en forme de tuyau (4), par exemple un soufflet roulant tubulaire d'un ressort pneumatique à soufflet roulant tubulaire, et dans lequel, dans la région de serrage (2), sont prévus au moins deux rehaussements périphériques (5) pour améliorer le serrage, **caractérisé en ce que** les deux rehaussements périphériques (5) sont réalisés sous forme trapézoïdale et sont pourvus d'un renfoncement périphérique en forme de rainure (6) ainsi que d'un moyen de serrage (10) en tant que bague de serrage métallique fermée (10) munie d'au moins deux rehaussements périphériques situés radialement à l'intérieur (11).

2. Moyen de serrage (10) selon la revendication 1, **caractérisé en ce que** les rehaussements (11) sont réalisés sur la bague de serrage (10) sous forme trapézoïdale ou sous forme courbe et enveloppent axialement le contour de serrage.
